# EUROPEAN PATENT SPECIFICATION

(11) **EP 1 009 660 B1**
(45) Date of publication and mention of the grant of the patent: **18.09.2002**
(21) Application number: 97910273.8
(22) Date of filing: 03.11.1997
(51) Int. Cl.: B65B 51/30, B65B 61/08, B26D 1/62, B26D 5/20

(54) **CROSS JOINING AND/OR CROSS CUTTING DEVICE IN A PACKAGING MACHINE OF THE FLOW PACKING TYPE**
SCHWEISS-SCHNEID-EINRICHTUNG FüR KONTINUIERLICH ARBEITENDE VERPACKUNGSMASCHINEN
COUPEUSE-SOUDEUSE A PLAT POUR MACHINE A EMBALLER A DEFILEMENT CONTINU

(30) Priority: 01.11.1996 DK 121996
(43) Date of publication of application: 21.06.2000
(73) Proprietor: Tetra Laval Holdings & Finance SA, 1009 Pully (CH)
(72) Inventor: HANSEN, Per, Henrik, DK-8340 Malling (DK)
(74) Representative: Elmeros, Claus
(86) International application number: DK9700498
(87) International publication number: WO98019915

(56) References cited:
- EP-A- 0 290 105
- EP-A- 0 725 007
- DE-A- 2 126 953
- GB-A- 2 247 000

## Description

The present invention concerns a device for cross joining and/or cross cutting of a moving web of paper or foil, especially in packaging machines for the flow-packing of mutually separated items such as consumer ice products, comprising a clamping tool which is moved in a circular path, possibly containing a knife to carry out a cut from the one side of the path towards an opposite and similarly circularly-rotated counter-tool at the other side of the path. These tool parts are typically arranged in a counter-rotating manner, so that they can be pressed towards each other during mutual advancement in a common movement section at the same rate of movement as that at which the product web is advanced. With flow-packing, this advancement is effected primarily by the influence of a driven pair of welding- or stamping-rollers which are used for the formation of a longitudinal assembly seam in the web of paper of foil, which is folded up to form a tubular holster around the products which are placed at mutual intervals on the web. The same tubular holsters must subsequently be cross-joined or cross-cut in the free areas between the products in the formation of individually packaged items, and it is well-known that the aforementioned rotating tool parts can effect both of these tasks, in that the knife holder can be configured as a welding tool or stamping tool for co-operation with a correspondingly-configured anvil, i.e. so that a cross-cut can be produced midway between a welding-together or stamping-together area provided at the same time, and which in one operation closes the rear end of the holster for the leading product and the front end of the holster for the following product.

The said rotating tool parts must naturally be moved synchronously with the advancement of the packaging web.

In packaging plants of the type considered, there will often exist several parallel packaging lines in order to achieve a high capacity, and it is hereby advantageous that the said tool parts for all of the webs can commonly be placed on oppositely- and transversely-disposed rotation arrangements. On the other hand, there can thus arise the problem that the tool parts continue to effect their independent advancement function on all of the webs, even though situations arise in which, because of an operational failure, it could be desirable to completely stop the advancement of one of the webs, e.g. for the carrying out of a local repair. That or the remaining advancement functions for the relevant web should be able to be deactivated separately, but since the cutting-over advancement continues to work, the material web will nevertheless not be completely disengaged.

According to the invention as defined in claim 1, it is hereby a principal consideration that in such multi-line plants there should be provided means for the temporary and selective deactuation of the advancement function which is effected on the web material by the said tool parts in the individual sections.

This is difficult to achieve with purely rotating systems with common drive, but with the invention it is realized that this desirable function is achieved in a relatively simple manner if the relevant rotating function is replaced by a system with paracyclic movement, whereby the tool parts are rotated in their movement paths with substantially unchanged orientation in the space. Both the cutting and the advancement action will be the same as with the rotating system, but now with the practical possibility that the tool parts can be in connection with changeover means with control connections in the form of cables or hoses respectively to or rather from such power sources which, when required, can be used to effect a local displacement of the tool parts in such a manner that these can be retracted to positions in which they will not be able to cooperate in the action on the intervening web material during their continued circular movement.

The tool parts, or just one of the tool parts, can thus be mounted in a movable manner in a holder which continues to participate in the circular movement, so that the basic simplicity of the common drive system can be totally maintained. It must be emphasized that the primary object of the invention is to provide the possibility for deactuation of the advancing action which normally takes place in connection with cross joining/cut-ting, and that it is not the cross-cutting function seen solely in itself which is desired to be deactuated, in that this almost per definition will not constitute any hindrance for an easy removal of the web material from the relevant packaging line.

The invention will now be described in more detail with reference to the drawing, in which
Fig. 1 is a schematic view of a known flow-packing line,
Fig. 2a)-c) illustrate an associated, known cross-joining and cutting mechanism seen in different positions,
Fig. 3a)-e) are corresponding illustrations of a mechanism according to the invention,
Fig. 4 is a plan view of a multi-line packaging plant according to the invention,
Fig. 5 is the same seen from the front, and
Fig. 6 is a detail front view of a tool part therein.

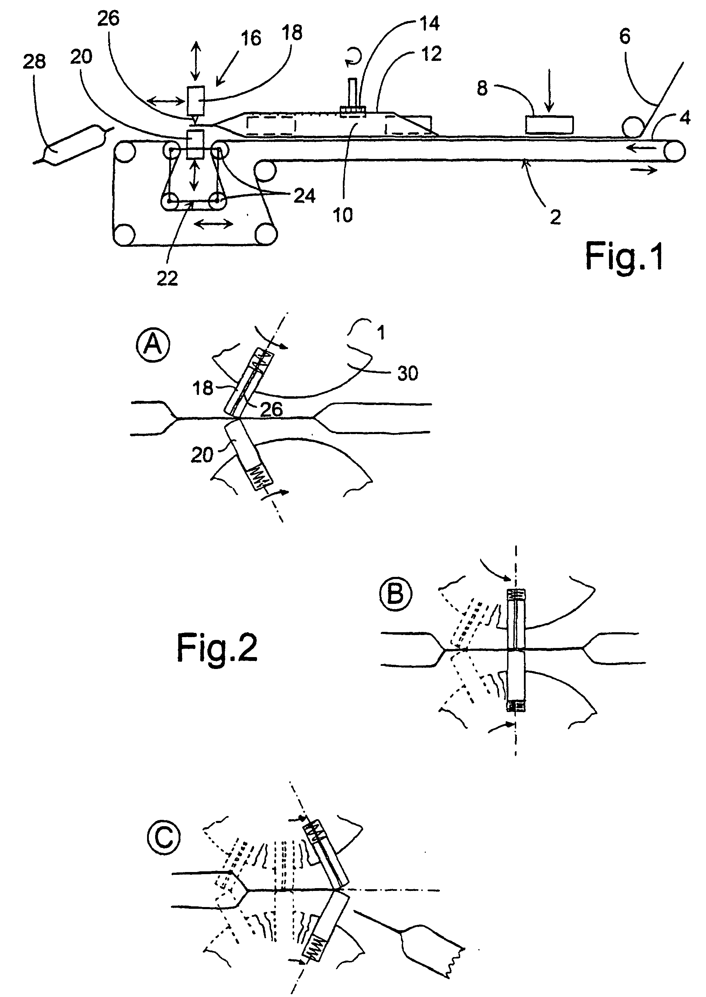

In fig. 1 is shown a flow-packing line with a conveyor belt 2 on the upper side 4 of which there is laid a web 6 of paper or foil which, during its movement forwards, receives individual items 8 which are supplied from a delivery station at suitable intervals, so that the items are deposited on the upper side 4 of the conveyor belt with a given mutual distance between them. By means of fixed, not-shown folding-up tools, there is effected a folding-up and folding-in of the freely projecting side parts 10 of the web 6 in the formation of a tubular holster around the items 8, and the upper edges 12 of the oppositely-facing web sides are pressed or welded together by means of oppositely-facing, driven stamping or welding rollers 14 for the longitudinal closing of the tubular holster.

The packaging web is then advanced further to a cross-joining station 16 in which a pair of tool jaws 18 and 20 are moved in towards each other in the vertical direction for local clamping together of the holster midway between two items 8, and simultaneously during common horizontal movement in the direction in which the web is advanced. As indicated by the arrows a and b, these are reciprocating movements, so that the tools can continuously process the holster between each pair of progressively-fed items 8. The lower tool 20 is mounted in connection with a horizontally-reciprocating carriage 22 which has reversing rollers 24 for the guiding of the belt 4 in a loop underneath this tool.

The one of the tools 18 and 20, here 18, is configured with a knife part 26 which, when the tools are brought together, can effect a cross-cutting of the holster pressed flat between the tools with the view to the delivery of cutoff and fully-packaged items 28.

There can exist machine embodiments whereby the vertical and the horizontal movements of the tools 18 and 20 can be controlled individually, but here there is to be considered a simpler embodiment whereby the tools are moved in a generally non-adjustable manner, i.e. merely by a purely circular guide. The associated conventional technique is illustrated in fig. 2, which shows the tools following a simple rotation pattern. They are disposed extending out from respective rotating axles 30, whereby with synchronous operation of said axles they will execute the required vertical and horizontal movements, and will come together precisely in connection with the advancement of the web 6 in between the items 8.

The rotating tools 18 and 20 will thus contribute towards the advancement of the web 6, in that during their common movement they are pressed in a flexible manner into the axle 30, whereby a knife 26 in the tool 18 becomes operative for the cross-cutting of the web in a middle-most phase of that stamping-together of the web which the tools will execute on both sides of the cutting line. Especially in the case of a mullet-line plant with common axle, it will not be practically possible to arrange a deactivation of a given set of tools, which will thus continue their advancement action even though the roller drive 14 and the belt 4 are made inoperative.

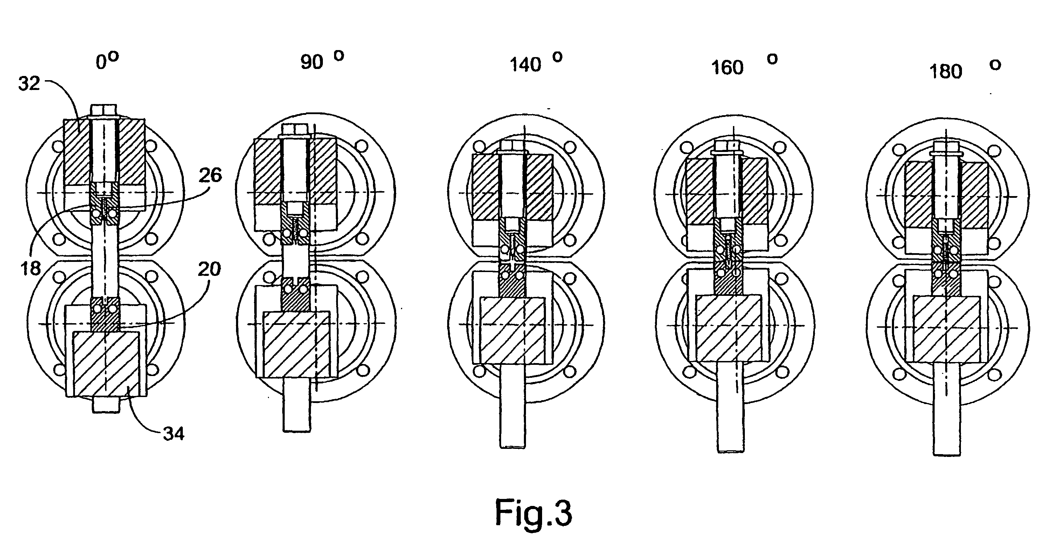

With the invention cf. fig. 3, the tools 18 and 20 are placed in holders 32 and 34 which are arranged on or directly constitute transverse beams having their ends connected with cams which, by surrounding, rotating eccentric bushes are made to execute a paracyclic movement as illustrated in a sequence of 180° in fig. 3. In principle, the effect herewith will be just as in fig. 2, i.e. where the tools from an open position, in which they allow the passage of the next item for cutting off (fig. 3a), are brought together for closing (fig. 3c), stamping together of the tubular web (fig. 3d-e) and cross-cutting of this (fig. 3e). During the sequence from 140° (fig. 3c) and all the way forward to 220° (i.e. after fig. 3e), a simultaneous transport of the material web will be effected to the right, again corresponding to fig. 2.

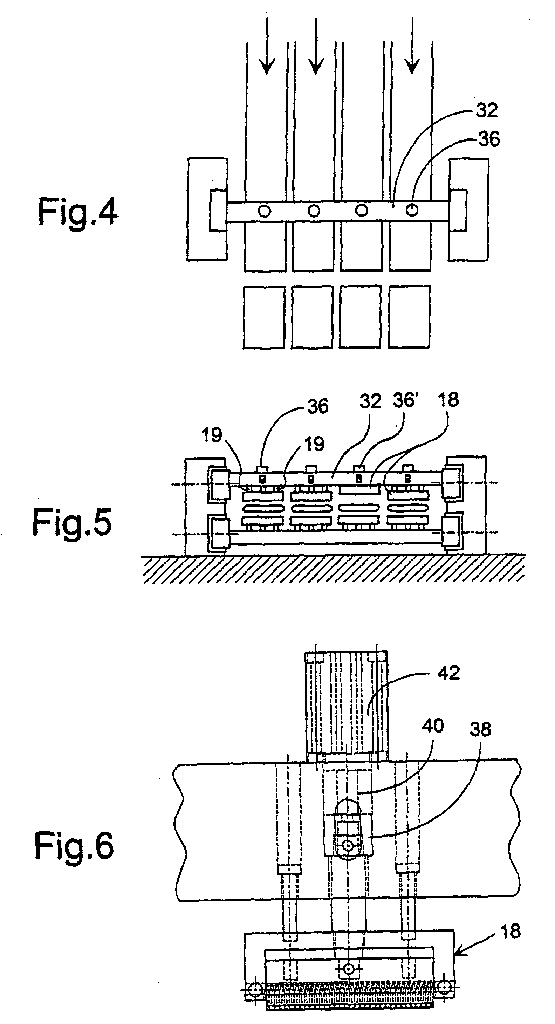

However, compared with fig. 2 there is the very great difference that the tools and their holders do not execute a rotation, but solely the aforementioned paracyclic movement, whereby it is practically possible to install externally-controllable retraction means such as changeover cylinders at any of the individual tools, but in practice at only the one tool. In figs. 4 and 5, such means are shown arranged above the upper beam 32 in the form of control cylinders 36, by means of which the knife tools 18 can be raised to an inactive position in which during continued movement they are unable to establish clamping of the web material. In fig. 5, such a raising of the tool is shown by 36'. It will be understood that it will not pose any problems in principle to arrange individual pressure-medium hoses for the cylinders 36, since these hoses will be exposed only to rocking movements of a limited extent.

Fig. 6 shows in more detail an example embodiment where a stamping tool 18 is housed in a holder 38 which is pressed to a bottom position by a piston rod 40 from a cylinder 42, and in which the tool can carry out its operative movements under elastic upwards displacement in the holder 38. Activation of the cylinder 42 will raise the holder 38 and herewith the tool to the inoperative position.

It should be noted that in principle the relevant group of changeover tools will be able to cooperate with counter-tools housed in accordance with fig. 2.

## Claims

1. Cross joining and/or cross cutting device in a packaging machine of the flow-packing type, especially in such machines in which there are conveyed two or more parallel packaging webs (6) in the form of paper or foil holsters containing axially separated packaging items (8) such as consumer ice products, said device comprising cooperating tools (18, 20) moved in complementary circular paths for the cross joining and/or cross cutting of the packaging web in the spaces between the packaged items (8), in that said tools (18, 20) are periodically brought together from a mutually separated position in which they allow the advancement of the next partly-packed item (8), to an operative position in which they clamp around the packaging web (6) during simultaneous co-movement in the direction in which said web is advanced, after which they are opened again and retracted to their start position for the handling of the next item (8), said tools or at least one of the tools (18, 20) preferably being mounted on a guiding part (32, 34) which is controlled to execute a paracyclic movement, by which the tool is moved in said circular path with substantially unchanged orientation in the space, and several sets of tools or at least several individual tools (18) in these sets being disposed on a common movement element, **characterized in that** the tools or the relevant individual tools (18) are housed in respective holders which are individually coupled to externally-controllable changeover elements (36), hereby making it possible for an associated tool (18) to be temporarily retracted to a position in which the tool, during its continued movement by the movement element (32), is deactuated with regard to the clamping-together of the packaging web (6).

2. Joining or cutting device according to claim 1, in which the common movement element (32) executes a paracyclic movement, and in which the changeover elements (32) of the tool holders thereon are selectively operatively connected to external power supply means through flexible wires or hoses.

## Patentansprüche

1. Querverbindungs- und/oder Querschneideinrichtung in einer Verpackungsmaschine des kontinuierlich verpackenden Typs, besonders in solchen Maschinen, in denen zwei oder mehr parallele Verpackungsbahnen (6) in Form von Papier- oder Folientaschen, die axial getrennte Verpackungsgegenstände (8) wie z.B. Verbrauchereisprodukte enthalten, gefördert werden, wobei die Einrichtung zusammenwirkende Werkzeuge (18, 20) umfaßt, die zum Querverbinden und/oder Querschneiden der Verpackungsbahn auf komplementären Kreisbahnen in den Räumen zwischen den verpackten Gegenständen (8) bewegt werden, indem die Werkzeuge (18, 20) periodisch aus einer voneinander getrennten Position, in der sie das Vorrücken des nächsten teilweise verpackten Gegenstands (8) erlauben, in eine Bedienungsposition zusammengebracht werden, in der sie während gleichzeitiger gemeinsamer Bewegung in die Richtung, in der die Bahn vorrückt, die Verpackungsbahn (6) umklammern, wonach sie wieder geöffnet und zum Behandeln des nächstens Gegenstands (8) in ihre Ausgangsposition zurückgezogen werden, wobei die Werkzeuge oder wenigstens eines der Werkzeuge (18, 20) bevorzugt an einem Führungsteil (32, 34) angebracht sind/ist, das zum Ausführen einer parazyklischen Bewegung gesteuert wird, durch die das Werkzeug auf der Kreisbahn mit im wesentlichen unveränderter Orientierung im Raum bewegt wird, und mehrere Werkzeugsätze oder wenigstens mehrere einzelne Werkzeuge (18) in diesen Sätzen auf einem gemeinsamen Bewegungselement angeordnet sind, **dadurch gekennzeichnet, daß** die Werkzeuge oder die relevanten einzelnen Werkzeuge (18) in jeweiligen Haltern eingebaut sind, die einzeln mit extern steuerbaren Umstellelementen (36) gekoppelt sind, wodurch es einem zugehörigen Werkzeug (18) ermöglicht wird, zeitweise in eine Position zurückgezogen zu werden, in der das Werkzeug während seiner fortgesetzten Bewegung durch das Bewegungselement (32) bezogen auf das Zusammenklammern der Verpackungsbahn (6) inaktiviert wird.

2. Verbindungs- oder Schneideinrichtung nach Anspruch 1, in der das gemeinsame Bewegungselement (32) eine parazyklische Bewegung ausführt und in der die Umstellelemente (32) der Werkzeughalter darauf durch flexible Drähte oder Schläuche selektiv bedienbar mit externen Stromversorgungsmitteln verbunden sind.

## Revendications

1. Dispositif d'assemblage transversal et/ou de coupe transversale dans une machine de conditionnement du type à conditionnement en flux, spécialement dans de telles machines dans lesquelles sont transportées deux ou plusieurs bandes de conditionnement parallèles (6) sous la forme d'étuis en papier ou en feuille contenant des articles de conditionnement axialement séparés (8) tels que des produits glacés de consommation, ledit dispositif comprenant des outils coopérants (18, 20) déplacés dans des trajectoires circulaires complémentaires pour l'assemblage transversal et/ou la coupe transversale de la bande de conditionnement dans les espaces entre les articles conditionnés (8), en ce que lesdits outils (18, 20) sont amenés périodiquement ensemble à partir d'une position mutuellement séparée, dans laquelle ils permettent l'avance de l'article partiellement emballé suivant (8), vers une position opératoire dans laquelle ils enserrent la bande de conditionnement (8) pendant le co-mouvement simultané dans la direction dans laquelle ladite bande est avancée, après quoi ils sont de nouveau ouverts et rétractés vers leur position de départ pour la manipulation de l'article suivant (8), lesdits outils ou au moins l'un des outils (18, 20) étant de préférence montés sur une pièce de guidage (32, 34) qui est commandée pour exécuter un mouvement paracyclique, par lequel l'outil est déplacé dans ladite trajectoire circulaire avec une orientation sensiblement inchangée dans l'espace, et plusieurs ensembles d'outils ou au moins plusieurs outils individuels (18) dans ces ensembles étant disposés sur un élément de déplacement commun,
**caractérisé en ce que** les outils ou les outils individuels concernés (18) sont logés dans des supports respectifs qui sont individuellement couplés à des éléments de commutation commandables extérieurement (36), en rendant ainsi possible pour un outil associé (18) d'être temporairement rétracté vers une position dans laquelle l'outil, pendant son mouvement continu par l'élément de déplacement (32), n'est pas actionné en ce qui concerne le serrage de la bande de conditionnement (6).

2. Dispositif d'assemblage ou de coupe selon la revendication 1, dans lequel l'élément de déplacement commun (32) effectue un mouvement paracyclique, et dans lequel les éléments de commutation (32) des supports d'outils sur ceux-ci sont reliés de façon opératoire et sélective à des moyens d'alimentation de puissance externes via des câbles ou des tuyaux souples.
